(19) Europäisches Patentamt

European Patent Office

Office européen des brevets

(11) Publication number: **0 203 234**
**B1**

# EUROPEAN PATENT SPECIFICATION

(45) Date of publication of patent specification: **29.11.89**

(21) Application number: **85303852.9**

(22) Date of filing: **31.05.85**

(51) Int. Cl.⁴: **C 08 J 5/18, B 29 C 49/00, B 29 C 55/12 // B29K67:00**

(54) Oriented, high density poly(ethylene terephthalate).

(43) Date of publication of application:
**03.12.86 Bulletin 86/49**

(45) Publication of the grant of the patent:
**29.11.89 Bulletin 89/48**

(84) Designated Contracting States:
**AT BE CH DE FR GB IT LI NL SE**

(56) References cited:
**AU-B- 505 897**
**FR-A-2 522 580**
**US-A-2 823 421**
**US-A-3 432 591**
**US-A-3 733 309**
**US-A-4 233 022**

**PATENTS ABSTRACTS OF JAPAN, vol. 7, no. 71 (M-202) 1216r, 24th March 1983; & JP - A - 57 212 026 (DAIAFOIL K.K.) 27-12-1982**

(73) Proprietor: **OWENS-ILLINOIS PLASTIC PRODUCTS INC.**
**One SeaGate**
**Toledo Ohio 43666 (US)**

(72) Inventor: **Jabarin, Saleh Abd-El-Karim**
**2115 Olde Planke Road**
**Holland Ohio 43528 (US)**

(74) Representative: **Gore, Peter Manson et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to biaxially oriented poly(ethylene terephthalate).

Poly(ethylene terephthalate), hereinafter called PET, finds many packaging uses, such as a packaging sheet or film, or hollow containers. The normal products of commerce have fairly good or low permeabilities to gases such as $CO_2$ and $O_2$. However, it is often desirable that PET have even lower gas permeabilities. The gas permeability of PET can be described by increasing the density thereof through heating to cause crystallization with consequent density increase. It is also usually desired that such PET materials, especially those used for packaging, be clear rather than opaque or even translucent.

The prior art teaches that PET film can be oriented and "heat set" to cause crystallization and consequent increase in density up to a density of 1.402 grams/cm³. Thus in col. 13 of de Pont Wyeth U.S. patent 3,733,309 it is stated that the maximum crystallinity attainable in biaxially oriented PET bottles is about 60% and in col. 4 it is stated that the 60 percent figure corresponds to a density of 1.402 g/cm³ (See also claim 1 thereof). Another de Pont patent to Heffelfinger, U.S. patent 3,432,591, bears this out, saying that heat setting of PET film carried to a density over 1.400 g/cm³ would lead to a loss of toughness. The products of the present invention on the other hand are tough, ductile and clear.

In Japanese published application 41,972, laid open April 3, 1979, it is disclosed heat setting should be limited so that the density does not exceed 1.40 g/cm³, important from the standpoint of clarity.

It has now been found possible to provide ductile substantially clear, biaxially oriented, high density PET material useful for packaging. In particular it is possible to produce a ductile poly(ethylene terephthalate) material which is clear, biaxially oriented and has a density of over 1.4050 g/cm³ at 25°C.

By "clear" PET in this specification and the appended claims is meant that the percent haze measured according to ASTM D 1003-61 (reapproved 1977) does not exceed 10 percent. It is usually below 3 percent.

According to the present invention there is provided biaxially oriented and heat set poly(ethylene terephthalate) material which has two substantially parallel faces each of an area which is extended as compared to the area of any planar cross-section cutting said two faces, the ratio of the extended area to the cross-sectional area being at least 10, the poly(ethylene terephthalate) being clear, ductile and having a density at 25°C of over 1.4050 g/cm³ and a percent haze of no more than 10 percent.

Thus, the material of the invention includes film or sheet material or a wall of a hollow body such as a hollow container.

The thickness of such cross-sectional (the separation of the two faces) is usually less than 0.125 cm (50 mils), more commonly from 0.000125 to 0.0875 cm (0.5 to 35 mils). The PET material usually has an inherent viscosity of at least 0.6 dl/g.

When inherent viscosity is referred to herein, it is the viscosity as measured in a 60/40 weight ratio phenol/tetrachlororthan solution at 25°C. Density was determined by the method described in ASTM 1505, entitled "Density Gradient Technique".

The present invention also provides poly(ethylene terephthalate) material according to any of claims 1 to 4 having an inherent viscosity of at least 0.6 dl/g.

The high density, clear, ductile and tough poly(ethylene terephthalate) material of the present invention can be made by biaxially stretch orienting PET at a temperature conductive to orientation, usually in the range from 75 to 120°C. and more often from 85 to 110°C.; thereafter, while the PET is under restraint preventing shrinkage, further heating the PET at a temperature of at least 230°C. until its density at 25°C is over 1.4050 g/cm³. Usual heat setting temperatures are 230 to 250°C.

In the following examples the products all had the properties of the invention mentioned hereinbefore.

In Examples 1 to 4 and the control example, tabulated in Table 1, 2 litre capacity PET bottles were blow moulded at an orientation temperature of about 90°C. The stretch ratio was about 4 in the hoop direction and about 2 in the axial direction. The density of the oriented bottle sidewalls was about 1.368 g/cm³. This density shows that crystallization took place during orientation, as expected. The bottles were blown into conformance with a cold mould; thus the stress due to the stretch blow moulding was frozen in. Square pieces were cut from the bottle sidewalls; all except the control sample were clamped in a frame which prevented shrinkage. They were then dried in an oven at 100°C. at high vacuum overnight. Then they were heated in the same oven at high vacuum at 240°C. for the times noted in Table 1, which also shows the thickness, oxygen permeability in (ml · mm)/(cm² · sec · kPa) (cc · ml/100 in² · day · atm), density and percent haze.

TABLE 1

| Example No. | Heat setting time, hrs. | Thickness | | Oxygen permeability | | Density g/cm³ | Percent haze |
| --- | --- | --- | --- | --- | --- | --- | --- |
| | | mm | mils | ml · mm / cm² · sec · kPa | cc · mil / 100 m² · day · atm | | |
| Control | None | 0.292 | 11.5 | $19.35 \times 10^{-12}$ | 4.3 | 1.3680 | 1.6 |
| 1 | 1 | 0.315 | 12.4 | $15.75 \times 10^{-12}$ | 3.5 | 1.4070 | 1.9 |
| 2 | 4 | 0.384 | 15.1 | $12.60 \times 10^{-12}$ | 2.8 | 1.4108 | 2.2 |
| 3 | 4 | 0.483 | 19 | | | 1.4130 | 8[a] |
| 4 | 16 | 0.437 | 17.2 | | | 1.4190 | 7 |

[a] haze apparently mostly due to surface scratches.

Example 5

PET film of 0.05 cm (20 mil) thickness and having an inherent viscosity of 0.67 dl/g. was clamped in a Long Extensional Tester, heated to about 90°C. and stretched at a rate of about 150%/Sec. The stretch ratio was 3.8×3.5 and the final thickness 0.038 mm (1.5 mils). The Biaxially oriented stretched film was cooled with an air hose. Its density was 1.3600 g/cm³. The film was then clamped in a frame preventing shrinkage, dried overnight in a vacuum oven at 100°C. and was heated in an oven under high vacuum for 4 hours at 240°C. The film was then cooled and removed from the frame. Its density at 25°C. was 1.4080 g/cm³ and it had less than 1 percent haze.

Example 6

PET film of a nominal 0.05 cm (20 mil) thickness and having an inherent viscosity of 0.66 dl/g. was clamped in a Long Extensional Tester, heated to about 90°C. and stretched at a rate of about 150%/Sec. in the machine direction. The stretch ratio was 3.8×2 and the final thickness 0.071 mm (2.8 mils). The biaxially oriented stretched film was cooled with an air hose. The film was then clamped in a frame preventing shrinkage, dried overnight in a vacuum oven at 100°C. and was heated in an oven under high vacuum for 4 hours at 250°C. The film was then cooled and removed from the frame. Its density at 25°C. was 1.4108 g/cm³ and it had 1.1 percent haze.

**Claims**

1. Biaxially oriented and heat set poly(ethylene terephthalate) material which has two substantially parallel faces each of an area which is extended as compared to the area of any planar cross-section cutting said two faces, the ratio of the extended area to the cross-sectional area being at least 10, the poly(ethylene terephthalate) being clear, ductile and having a density at 25°C of over 1.4050 g/cm³ and a percent haze of no more than 10 percent.

2. Poly(ethylene terephthalate) material according to claim 1 wherein the two faces are separated by less than 0.125 cm (50 mils).

3. Poly(ethylene terephthalate) material according to claim 2 wherein the two faces are separated by from 0.000125 to 0.0875 cm (0.5 to 35 mils).

4. Poly(ethylene terephthalate) material according to any of claims 1 to 3 wherein the percent haze is below 3 percent.

5. Poly(ethylene terephthalate) material according to any of claims 1 to 4 having an inherent viscosity of at least 0.6 dl/g. measured in a 60/40 weight ratio phenol/tetrachloroethane solution at 25°C.

6. A method for the production of poly(ethylene terephthalate) material according to any of claims 1 to 5 which comprises biaxially stretch orienting poly(ethylene terephthalate) at a temperature conductive to orientation and thereafter, while the poly(ethylene terephthalate) is under restraint preventing shrinkage, further heating the poly(ethylene terephthalate) at a temperature of at least 230°C until its density at 25°C is over 1.4050 g/cm³.

7. A method according to claim 6 wherein the poly(ethylene terephthalate) is biaxially stretch oriented at 75 to 120°C.

8. A method according to claim 7 wherein the poly(ethylene terephthalate) is biaxially stretch oriented at 85 to 110°C.

9. A method according to any of claims 6 to 8 wherein the further heating is performed at 230 to 250°C.

10. A film or sheet or a wall of a hollow body formed of a material according to any claims 1 to 5.

# EP 0 203 234 B1

**Patentansprüche**

1. Zweiachsig orientiertes und wärmebehandeltes Poly(ethylenterephthalat)-material mit zwei im wesentlichen parallelen Seiten, von denen jede eine ausgedehnte Fläche besitzt im Vergleich zu der Fläche jedes planaren Querschnittes, der beide Seiten schneidet, wobei das Verhältnis der ausgedehnten Fläche zu der Fläche des Querschnittes mindestens 10 beträgt, das Poly(ethylenterephthalat) klar und dehnbar ist mit einer Dichte von mehr als 1.4050 g/cm³ bei 25°C und eine prozentuale Trübung von nicht mehr als 10% aufweist.

2. Poly(ethylenterephthalat)-material nach Anspruch 1, bei dem die beiden Seiten weniger als 0,125 cm (50 mils) voneinander entfernt sind.

3. Poly(ethylenterephthalat)-material nach Anspruch 2, bei dem die Entfernung der beiden Seiten zueinander in einem Bereich von 0,000125 bis 0,0875 cm (0,5 bis 35 mils) liegt.

4. Poly(ethylenterephthalat)-material nach einem der Ansprüche 1 bis 3, bei dem die prozentuale Trübung geringer als 3% ist.

5. Poly(ethylenterephthalat)-material nach einem der Ansprüche 1 bis 4, mit einer inherenten Viskosität von mindestens 0,6 dl/g gemessen bei 25°C in einer Phenol/Tetrachlorethanlösung mit einem Gewichtsverhältnis 60/40.

6. Verfahren zur Herstellung eines Poly(ethylenterephthalat)-materials nach einem der Ansprüche 1 bis 5, bei dem Poly(ethylenterephthalat) zweiachsig streckorientiert wird bei einer Temperatur, die die Orientierung fördert, und bei dem danach, während das Poly(ethylenterephthalat) unter Spannung gehalten wird, um eine Schrumpfung zu vermeiden, das Poly(ethylenterephthalat) weiter auf eine Temperatur von mindestens 230° erwärmt wird, bis seine Dichte bei 25°C mehr als 1.4050 g/cm³ ist.

7. Verfahren nach Anspruch 6, bei dem das Poly(ethylenterephthalat) bei einer Temperatur von 75 bis 120°C zweiachsig streckorientiert wird.

8. Verfahren nach Anspruch 7, bei dem das Poly(ethylenterephthalat) bei einer Temperatur von 85 bis 110°C zweiachsig streckorientiert wird.

9. Verfahren nach einem der Ansprüche 6 bis 8, bei dem die weitere Erwärmung in einem Bereich von 230 bis 250°C durchgeführt wird.

10. Film oder Folie oder Wand eines hohlen Körpers aufgebaut aus einem Material nach einem der Ansprüche 1 bis 5.

**Revendications**

1. Matériau de poly(téréphtalate d'éthylène) orienté biaxialement et thermodurci, comportant deux faces sensiblement parallèles ayant chacune une superficie qui est étendue par comparaison avec la superficie d'une section transversale plane quelconque coupant lesdites deux faces, le rapport de la surface étendue à la surface de la section transversale étant d'au moins 10, le poly(téréphtalate d'éthylène) étant limpide, ductile et ayant une densité à 25°C supérieure à 1,4050 g/cm³ et un pourcentage de trouble ne dépassant pas 10%.

2. Matériau de poly(téréphtalate d'éthylène) selon la revendication 1, dont les deux faces sont séparées d'une distance inférieure à 0,125 cm (50 mils).

3. Matériau de poly(téréphtalate d'éthylène) selon la revendication 2, dont les deux faces sont séparées d'une distance comprise entre 0,00125 et 0,0875 cm (0,5 et 35 mils).

4. Matériau de poly(téréphtalate d'éthylène) selon l'une quelconque des revendications 1 à 3, dans lequel le pourcentage de trouble est inférieur à 3%.

5. Matériau de poly(téréphtalate d'éthylène) selon l'une quelconque des revendications 1 à 4, qui présente une viscosité inhérente d'au moins 0,6 dl/g, mesurée à 25°C dans une solution de phénol/tétrachloroéthane au rapport pondéral 60/40.

6. Procédé de production d'un matériau de poly(téréphtalate d'éthylène) selon l'une quelconque des revendications 1 à 5, qui consiste à orienter par étirage bi-axial le poly(téréphtalate d'éthylène), à une température favorisant l'orientation, et ensuite, pendant que le poly(téréphtalate d'éthylène) est sous contrainte pour en empêcher le retrait, à chauffer encore le poly(téréphtalate d'éthylène) à une température d'au moins 230°C, jusqu'à ce que sa densité à 25°C soit supérieure à 1,4050 g/cm³.

7. Procédé selon la revendication 6, dans lequel on oriente par étirage bi-axial le poly(téréphtalate d'éthylène) à une température comprise entre 75 et 120°C.

8. Procédé selon la revendication 7, dans lequel on oriente par étirage bi-axial le poly(téréphtalate d'éthylène) à une température comprise entre 85 et 110°C.

9. Procédé selon l'une quelconque des revendications 6 à 8, dans lequel on effectue le chauffage supplémentaire à une température de 230 à 250°C.

10. Film ou feuille ou paroi d'un corps creux formé en un matériau selon l'une quelconque des revendications 1 à 5.